# EUROPÄISCHE PATENTSCHRIFT

(11) **EP 1 835 983 B1**
(45) Veröffentlichungstag und Bekanntmachung des Hinweises auf die Patenterteilung: **05.10.2011**
(21) Anmeldenummer: 05818915.0
(22) Anmeldetag: 14.12.2005
(51) Int. Cl.: B01D 61/00, B01D 71/02, B01D 69/02, B01D 69/06, C12N 15/10, C07K 1/14, B01D 35/06

(54) **VERFAHREN ZUR ABTRENNUNG MAGNETISCHER PARTIKELFRAKTIONEN DURCH EINE SEMIPERMEABLE MEMBRAN**
PROCESS FOR THE SEPARATION OF MAGNETIC PARTICLE FRACTIONS THROUGH A SEMI-PERMEABLE MEMBRANE
PROCEDE POUR SEPARER DES FRACTIONS DE PARTICULES MAGNETIQUES PAR UNE MEMBRANE SEMIPERMEABLE

(30) Priorität: 24.12.2004 DE 102004062535
(43) Veröffentlichungstag der Anmeldung: 26.09.2007
(73) Patentinhaber: Karlsruher Institut für Technologie, 76131 Karlsruhe (DE)
(72) Erfinder: FRANZREB, Matthias, 76185 Karlsruhe (DE); ROGGE, Tilmann, 69123Heidelberg (DE)
(74) Vertreter: Weddigen, Andreas
(86) Internationale Anmeldenummer: PCT/EP2005/013426
(87) Internationale Veröffentlichungsnummer: WO 2006/069628

(56) Entgegenhaltungen:
- WO-A-01/85295
- WO-A-2004/078306
- US-A1- 2003 168 408

## Beschreibung

Die Erfindung betrifft ein Verfahren für eine Überführung magnetischer Partikelfraktionen von einem ersten Fluid zu einem zweiten Fluid durch ein semipermeables Membransystem gemäß dem ersten Patentanspruch.

Eine Membran der vorgenannten Art ist in Hinblick einer Abgrenzung zu Schwingmembrane eine Trennmembran, d.h. eine Trennwand oder Trennschicht zwischen zwei Fluidmengen. Eine semipermeable Membran (Osmosemembran) ist lediglich von bestimmten Stoffen oder Bestandteilen der Fluidmengen durchdringbar, während sie für andere Stoffe oder Bestandteile eine undurchdringbare Barriere darstellt. Dieser selektive Stoffaustausch, auch Osmose genannt, kann sowohl in beiden Richtungen (Diosmose), oder wie im vorgenannten vorliegenden Fall nur in einer Durchdringungsrichtung erfolgen (Endosmose).

Semipermeable Membranen sind beispielsweise für das Leben zwingend erforderlich. Jede biologische Zelle ist von einer semipermeablen Membran umgeben, die für bestimmte Substanzen durchlässig sein muss.

Semipermeable Membranen eignen sich auch für technische Separationsverfahren. Einen Überblick sowohl über Membranverfahren allgemein als auch über Membranverfahren mit semipermeablen Membranen im Speziellen findet sich in [1].

Eine in [1] offenbarte Ausführungsform, bekannt aus der Elektrodialyse, basiert auf einer Kombination aus elektrischem Feld und einer semipermeablen Membran. Hierbei kommt es durch das Anlegen eines elektrischen Felds zu einer gerichteten Wanderung von Ionen durch semipermeable Ionenaustauschermembranen. Diese Membranen funktionieren derart, dass sie idealisiert gesehen Ionen eines Ladungstyps leicht passieren lassen, wogegen Ionen des entgegen gesetzten Ladungstyps vollständig an einer Passage gehindert werden. So können z.B. Kationen eine Kationenaustauschermembran passieren, wogegen diese für Anionen eine praktisch unüberwindliche Barriere darstellen. Durch die Kombination aus treibender Kraft (elektrisches Feld, Druck etc.) und semipermeabler Membran ist dadurch eine kontinuierliche Separation einer Substanz entgegen einem Konzentrationsgefälle möglich.

Weitere semipermeable Membranen für endosmotische Verfahren basieren auf der Ausnutzung hydrophiler und hydrophober Stoffeigenschaften btreffen beispielsweise die selektive Abreicherung organischer Verbindungen aus wässrigen Lösungen durch so genannte Pervaporationsmembranen. Die organischen Verbindungen durchdringen die hydrophobe Membran und werden auf der anderen Membranseite verdampft, während Wasser durch die Membran gesperrt ist.

Die Selektionsmerkmale der zu separierenden Stoffe basieren somit auf elektrischen Ladungen (positiv oder negativ) oder hydrophiler oder hydrophober Eigenschaften, was die Einsatzmöglichkeiten einer technischen Endosmose auf bestimmte Stoffgruppen einschränkt.

Um die scheinbare Selektivität einer Membran für bestimmte Substanzen zu erweitern, wird in [1] eine Kombination dieser Substanz mit einer weiteren oder eine Anbindung dieser an ein Trägerpartikel vorgeschlagen. So können z.B. ungeladene Moleküle durch chemische Reaktion mit einem geladenen Molekül für eine Endosmose basierend auf der vorgenannten elektrostatischen Wechselwirkung konfektioniert werden. Dagegen wird eine Bindung der Substanz an Makromoleküle oder Partikel oftmals dazu genutzt, den so entstandenen größeren Verbund für Membranen, die nur für kleine Partikelgrößen durchlässig sind (Nano-, Ultra- bzw. Mikrofiltrationsmembranen), unpassierbar zu machen und aufzukonzentrieren, während die umgebende Lösung die Membran aufgrund eines Druckgradienten durchdringt. Das letztgenannte Beispiel unterscheidet sich aber von den zuvor beschriebenen Membranverfahren darin, dass die gewünschte Substanz zurückgehalten wird und nicht die Membran durchdringt, d.h. die Substanz verbleibt, wenn auch in aufkonzentrierter Form innerhalb des ursprünglichen Lösungsmediums. Bei dem Verfahren mit semipermeablen Membranen wechselt die Substanz dagegen von dem Medium auf der einen Seite der Membran auf das auf der anderen Seite der Membran vorliegende Medium. Das Medium auf der Permeatseite kann sich dabei z.B. in pH und Salzgehalt von dem Medium der Feed- bzw. Retentatseite unterscheiden oder auch komplett aus einem anderen Lösungsmittel wie z.B. Ethanol bestehen. Im Falle der Pervaporation findet sogar ein Wechsel von einem flüssigen in ein gasförmiges Medium statt. Der Mediumswechsel eröffnet dabei wesentlich breitere verfahrenstechnische Anwendungsmöglichkeiten als eine einfache Aufkonzentrierung durch größenselektive Membranen.

Etwas vielseitiger als größenselektive Membranen sind funktionalisierte Membranen, wobei es sich um adsorptiv wirkende Festphasen in Membranform handelt. Hierzu werden Polymermembranen, die zunächst aufgrund einer definierten Porenverteilung nur über Größenausschluss wirken, in einem weiteren Schritt funktionalisiert. Eine andere Möglichkeit besteht darin z.B. faserförmige Sorbensmaterialien in Membranform zu pressen oder zu weben. Werden diese Membranen nun durchströmt werden durch die enthaltenen funktionellen Gruppen bestimmte Substanzen sorptiv gebunden und damit zurückgehalten. Die Membran wirkt im Prinzip wie ein sehr flaches Sorptionsfilter. Dies hat zur Folge, dass auch bei geringen Durchströmungsgeschwindigkeiten aufgrund der großen Fläche ausreichende Durchsätze erreichbar sind. Das Sorptionsprinzip führt aber auch dazu, dass mehr oder weniger rasch die Bindekapazität erschöpft und zur Vermeidung eines Durchbruchs die Durchströmung gestoppt werden muss. Anschließend muss in einem separaten Verfahrensschritt die sorptiv wirkende Membran wieder regeneriert werden, wobei dies in der Regel durch Elution der zuvor gebundenen Substanz geschieht. Hierdurch ist, ähnlich wie im Falle echt semipermeabler Membranen, ein Wechsel des Lösungsmittels möglich. Im Unterschied zu dem kontinuierlichen Verfahrensprinzip im Falle echt semipermeabler Membranen, ist aber mit sorptiv wirkenden Membranen nur ein zyklischer, diskontinuierlicher Betrieb möglich.

Ferner ist aus [2] ein semipermeables cross-flow Membransystem zur Abtrennung magnetischer Partikelfraktionen bekannt, das sich aber nicht zur selektiven Überführung dieser magentischen Partikelfraktionen eignet.

Gelänge es die Selektion in permeable und unpermeable Substanzen weit variabler und spezifischer zu realisieren, würde dem Verfahren jedoch ein ganz neues und breites Anwendungsfeld in der chemischen und biotechnologischen Industrie offen stehen.

Aufgabe der Erfindung ist es daher, ein Verfahren für eine Überführung magnetischer Partikelfraktionen von einem ersten Fluid zu einem zweiten Fluid durch ein semipermeables Membransystem vorzuschlagen, das für eine Endosmose für magnetische Partikelfraktionen einsetzbar ist und als eine semipermeable Barriere für magnetische Mikropartikel wirkt. Das Verfahren soll insbesondere eine kontinuierliche Durchdringung magnetischer Mikropartikel ermöglichen, wobei die Mikropartikel von einem Fluid auf der einen Seite der Membran auf ein Fluid auf der anderen Seite wechseln.

Die Aufgabe wird durch ein Verfahren mit den Merkmalen des ersten Patentanspruchs gelöst. Die Unteransprüche geben vorteilhafte Ausgestaltungen wieder.

Zur Lösung der Aufgabe wird ein Verfahren an einem semipermeablen Membransystem für magnetische Partikelfraktionen in einem Fluid vorgeschlagen, umfassend, eine Membran mit mindestens einen die Membran überbrückenden Kanal, Mittel zur Erzeugung einer Fluidströmung axial zum Kanal mit zwei Schaltstellungen entsprechend der beiden Fließrichtungen sowie ein ein- und ausschaltbares Magnetfeld im Kanal. Jede der beiden Schaltstellungen ist somit einer Fließrichtung zugeordnet, wobei während des Betriebs ein zyklischer Wechsel der beiden Schaltstellungen erfolgt und wobei das Magnetfeld bei einer ersten Schaltstellung eingeschaltet und bei der zweiten Schaltstellung ausgeschaltet ist. Das Magnetfeld ist folglich nur in einer Fließrichtung aktiviert, während es in der entgegengesetzten Fließrichtung inaktiv verbleibt.

Die Membran stellt eine Trennung zwischen zwei Fluide dar, ist aber für diese grundsätzlich durchlässig. Die Fluide umfassen dabei Suspensionen magnetischer Mikropartikelfraktionen mit Partikelgrößen, die geometrisch eine Durchlässigkeit durch die vorgenannten mikrofluidischen Kanäle zulassen, d.h. auch die größten Partikelabmessungen liegen vollständig unterhalb des kleinsten Durchmessers bzw. der kleinsten Querschnittabmessungen der Kanäle.

Im Betriebszustand des Membransystems erfolgt ein zyklisches Abwechseln der vorgenannten Schaltstellungen, die vorzugsweise über die vorgenannten Mittel zur Erzeugung einer Fluidströmung in den Kanälen gesteuert werden. Die Mittel greifen dabei bevorzugt an den beiden Fluiden beidseitig der Membran an, vorzugsweise über eine Druckerhöhung oder -absenkung an einem der Fluide zur Erzeugung einer Druckdifferenz an den beiden Membranseiten. Die Mittel können im Fall von stehenden Fluiden (ohne Zu- und Ablauf neben der Membran) Aktoren zur Erzeugung eines Druckanstiegs oder eines Druckimpulses umfassen oder im Fall von bewegten Fluiden (mit Zu- und Ablauf neben der Membran) Ventilsteuerungen umfassen. Bei bewegten Fluiden kann eine Überströmung der beiden Membranoberflächen parallel, antiparallel oder auch im Kreuzstrom erfolgen.

In einer Schaltstellung erfolgt ein Hinzuschalten des vorgenannten Magnetfeldes in den Kanälen, wobei die Magnetfeldlinien die Kanäle kreuzen. Auf die in den Kanälen befindlichen Magnetpartikel wirkt damit eine magnetische Kraft, welche diese bevorzugt an eine Wandung der Kanäle drückt und somit an einen weiteren Transport in der Fluidströmung in den Kanälen behindert.

Diese Wirkung kann dadurch verstärkt werden, dass die Membran, insbesondere die Kanalwandungen selbst ganz oder teilweise aus einem magnetisierbaren, vorzugsweise ferromagnetischen Material bestehen. Das aktivierte Magnetfeld fokussiert sich dadurch im Bereich der Membran in nachfolgend beschriebener Weise. Ferner wirkt die magnetisch angeregte Wandung wie die Pole eines Magnets auf die magnetischen Partikelfraktionen und verstärkt damit signifikant die auf die Partikel wirkenden Kräfte und damit direkt die Partikelhaftung an der Wandung. Bevorzugt umfasst die Membran mehrere übereinander gestapelte flache Lagen aus einem durchströmbaren und massiven ferromagnetischen Material in abwechselnder Reihenfolge und die beiden Membranoberflächen überbrückend.

Das durchströmbare Material umfasst bevorzugt ungeordnete Drahtgewebe, geordnete Drahtgewebe, Röhren, Partikelgranulat oder Kugelschüttungen jeweils umfassend ein magnetisierbares, bevorzugt ferromagnetisches Material mit weichmagnetischen Eigenschaften. Vergleichsweise feine magnetisierbare Komponenten bilden in einem Magnetfeld lokale Magnetpole aus, die auf magnetische Partikel eine starke Anziehungskraft ausüben. Als Folge werden die Partikel aus dem Medium abgeschieden und lagern sich im Bereich der induzierten Magnetpole an die Drähte an.

In der anderen Schaltstellung ist das vorgenannte Magnetfeld deaktiviert. Auf die Magnetpartikel wirken keine magnetischen Kräfte, sodass die Anteile der Magnetpartikelfraktion, die sich im Fluid in den Kanälen befinden, mit der Fluidströmung transportiert werden.

Die Erfindung eignet sich insbesondere für die selektive Überführung der magnetischen Partikelfraktion in eines der vor genannten Fluide auf einer Seite der Membran, und zwar in der Weise, dass eine Vermischung anderer nichtmagnetischer Bestandteile der beiden Fluide an sich nahezu ausgeschlossen werden kann. Wesentlich hierfür ist eine Anpassung der Zykluszeiten der vorgenannten, sich zyklisch abwechselnden Schaltstellungen. Einerseits darf ein Schaltzustand nicht so lange beibehalten werden, dass die nichtmagnetischen Bestandteile über die Fluidströmung in den Kanälen die Membran vollständig durchdringen können, andererseits ist sicherzustellen, dass im Rahmen mehrerer Schaltstellungen in Folge eine über die Schaltstellungsfolge akkumulierende Vorzugrichtung für die magnetischen Bestandteile einer der beiden Fluide entsteht.

Vorzugsweise wechseln sich die Schaltstellungen zyklisch ab, wobei die Verweilzeiten beider Schaltstellungen in ihrer jeweiligen Summe dem Verhältnis entsprechen, das sich aus dem Verhältnis der Durchdringungszeiten für die nichtmagnetischen Bestandteile eines Fluids durch die Membran ergibt.

Es bietet sich ferner an, die einzelnen Verweilzeiten in beiden Schaltstellungen möglichst auf jeweils einem maximal möglichen, durch die vorgenannten Durchdringungszeiten für die nichtmagnetischen Bestandteile eines Fluids durch die Membran vorgegebenen Werten festzulegen.

Weisen die nichtmagnetischen Bestandteile der Fluide beidseitig der Membran ähnliche Durchströmungscharakteristika, insbesondere ein gleiches Durchströmungsverhalten und gleiche Durchströmungszeiten auf, bietet es sich an, für die beiden sich abwechselnden Schaltzustände gleiche Verweilzeiten, sowohl einzeln als auch in Summe, vorzusehen.

Werden die vorgenannten Vorgaben für hinsichtlich der Zykluszeiten der Schaltstellungswechsel nicht eingehalten, kemmt es zu einem Nettofluidstrom nichtmagnetischer Bestandteile von einer Membranseite zu der anderen. Dies kann je nach Schaltstellungszeiten auch dem Transport der magnetischen Partikelfraktion entgegen gesetzt erfolgen, vor allem dann, wenn die Schaltstellungszeiten ohne Magnetfeld die der mit Magnetfeld deutlich übersteigen. Dieser Nettostrom eines Fluids entgegen der Wanderungsrichtung der magnetischen Partikel kann im Falle von z.B. Wasch- oder Elutionsvorgängen sehr günstig sein. Da in diesem Fall ein Nettodurchfluss in eine Durchflussrichtung gewollt ist, bestehen in der entsprechend zugeordneten Schaltstellung auch keine Zeitbegrenzung für eine maximal mögliche Verweilzeit mehr.

Das Magnetfeld ist durch Elektromagnete, supraleitende Magnetspulen oder schaltbare Permanentmagnete erzeugbar.

Eine interessante Kombination aus dem Einsatz selektiver Trägerpartikel und dem vorgenannten Membraneinsatz stellt die Verwendung der vorgenannten magnetischen Partikelfraktionen als Mikrosorbentien dar. Hierbei werden die magnetischen Partikelfraktionen als Trägerpartikel im Größenbereich weniger Mikrometer oder darunter an ihrer Oberfläche so funktionalisiert, dass sie selektiv bestimmte Substanzen binden. Die Abtrennung der magnetischen Mikrosorbentien aus der umgebenden Lösung, d.h. der verbleibenden nichtmagnetischen Bestandteile des Fluids erfolgt mit der vorgenannten Separierungstechnologie, wobei die Mikrosorbentien sich auf einer Membranseite aufkonzentrieren. Auf vorteilhafter Weise sind durch diese Variante auch bestimmte nichtmagnetische Fluidanteile mit den magnetischen Partikelfraktionen von anderen nicht absorbierenden nichtmagnetischen Bestandteilen trennbar.

Anstelle des Produkts lassen sich mit der beschriebenen Vorgehensweise auch analog Kontaminationen oder Störstoffe aus einem Gemisch entfernen. So lassen sich z.B. mit entsprechend funktionalisierten magnetischen Mikropartikeln gezielt Proteasen aus einem Proteingemisch entfernen. Bei diesen Proteasen handelt es sich um Enzyme, die bei Verbleib innerhalb des Gemischs zu einer langsamen Zerstörung der Zielproteine führen.

Eine Anwendung ist z.B. die Aufreinigung und Aufkonzentrierung eines wertvollen Proteins aus einem Gemisch zahlreicher Biomoleküle wie andere Proteine, DNA, Zucker etc. Hierzu werden funktionalisierte magnetische Mikropartikel eingesetzt, die das Zielprotein mit hoher Selektivität binden. Derartige magnetische Mikropartikel sind in den Bereichen der Bioanalytik und medizinischen Diagnostik bereits weit verbreitet. Die Vorgehensweise zur Proteinreinigung unter Einsatz der vorgenannten Membran ist wie folgt:
1. Einmischen der Mikropartikel in das Gemisch. Aufgrund der hohen spezifischen Oberfläche der Mikropartikel kommt es hierdurch sehr rasch zu einer selektiven Bindung des Zielproteins.
2. Überströmen der vorgenannten Membran mit der Suspension aus Mikropartikeln und Proteingemisch. Aufgrund der beschriebenen semipermeablen Eigenschaften der Membran können die Mikropartikel dabei auf die andere Seite der Membran wechseln wogegen die Lösung und die darin enthaltenen, unerwünschten Biomoleküle auf der ursprünglichen Seite verbleiben.
3. Die Membranseite, auf die die Magnetpartikel wechseln, wird gleichzeitig von einer Elutionslösung mit geringem Volumenstrom überströmt. Die Elutionslösung löst das Zielprotein von den Magnetpartikeln, wobei es aufgrund des geringeren Volumenstroms an Elutionslösung gegenüber dem Ausgangsgemisch zu einer Aufkonzentrierung kommt.
4. Durch einen weiteren Einsatz einer vorgenannten Membran können die regenerierten Magnetpartikel von dem eluierten Zielprotein getrennt und erneut für eine Bindung eingesetzt werden. Zusätzlich zu dem genannten Vorgehen kann das durchführen weiterer Zwischenschritte, wie z.B. Wachschritte sinnvoll sein, wobei diese ebenfalls unter Einsatz vorgenannter Membranen durchgeführt werden können.

Die Erfindung sowie dessen Details werden im Folgenden beispielhaft an Ausführungsformen anhand von Figuren näher erläutert. Es zeigen
**Fig.1** das semipermeable Membransystem als Trennung zwischen zwei Fluiden 1 und 2,
**Fig.2** eine prinzipielle Detailschnittdarstellung der Membran in einer Schaltstellung mit deaktivierten Magnetfeld,
**Fig.3** eine prinzipielle Detailschnittdarstellung der Membran in einer Schaltstellung mit aktivierten Magnetfeld,
**Fig.4** einen prinzipielle Darstellung wesentlicher Komponenten eines Membransystems mit zylinderförmiger Membran konzentrisch in einem zylindrischen Gehäuse sowie
**Fig.5** eine prinzipielle Darstellung des gesamten Membransystems in der Ausführungsform gemäß **Fig.4****.**

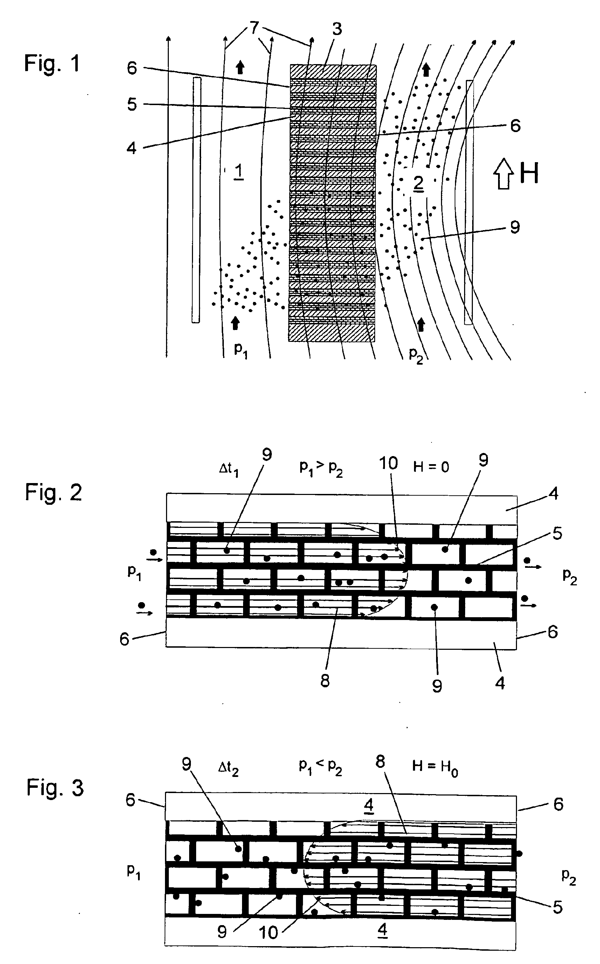

**Fig.1** zeigt eine schematische Schnittdarstellung der wesentlichen Komponenten einer ersten Ausführungsform mit einer plattenförmigen Membran 3 als Trennung zwischen zwei parallel zur Membran bewegten Fluiden 1 und 2 mit je einem Druck P1 bzw. P2. Die Membran umfasst eine Sandwichstruktur aus abwechselnden Lagen aus ferromagnetischem Massivmaterial 4 und Lagen aus ferromagnetischem Drahtgewebe 5. Die genannten Lagen sind orthogonal zu den beiden Membranoberflächen 6 angeordnet. Die Zwischenräume im Drahtgewebe bilden die mikrofluidischen Kanäle als Fluiddurchlass zwischen den beiden Membranoberflächen. Die lateralen Abmessung der Lagen insbesondere des ferromagnetischen Drahtgewebes 5 zwischen den Membranoberflächen 6 beträgt dabei ein Vielfaches deren Dicke bzw. Höhe. Die gesamte Magnetmembran befindet sich zusätzlich unter dem Einfluss eines schaltbaren, in **Fig.1** durch Magnetfeldlinien 7 angedeuteten Magnetfelds (Magnetfeldstärke H). Nicht dargestellt sind die Mittel zur Erzeugung einer Fluidströmung axial zum mikrofluidischen Kanal mit zwei Schaltstellungen entsprechend der beiden Fließrichtungen, d.h. zur Erzeugung eines hin- und herschaltbaren Differenzdrucks zwischen den Drücken P1 und P2.

Die magnetischen Partikel befinden sich anfangs in einem der vorgenannten Fluide 1 oder 2 suspendiert. Eine Durchströmung eines der beiden Fluide durch die mikrofluidischen Kanäle erfolgt Differenzdruck gesteuert zwischen P1 und P2 in Richtung des Druckgefälle.

Die Funktionsweise der Magnetmembran ist aus den **Fig.2 und 3** ersichtlich, die mit den beiden vorgenannten Schaltstellungen den Betriebszustand des Membransystems gemäß **Fig.1** wiedergeben. Dargestellt sind jeweils eine Lage des Drahtgewebes 5 sowie die beiden angrenzenden Lagen des Massivmaterials 4 zwischen den beiden Membranoberflächen 6.

Während der in **Fig.2** dargestellten Schaltstellung ist das Magnetfeld ausgeschaltet (H = 0) und im Fluid 1 herrscht ein etwas höherer Druck P1 als der Druck P2 im Fluid 2. Aufgrund dieses Druckunterschieds ΔP (P1 > P2) kommt es zu einem Fluidstrom 8 durch den freien Zwischenraum des ferromagnetischen Drahtgewebes in Richtung des Fluids 2. Mit der Fluidströmung werden dabei auch frei suspendierte magnetische Partikel 9 in die durch das Drahtgewebe 5 gebildeten Spalte (offene, durchgängige Porosität) transportiert.

**Fig.3** repräsentiert dagegen die vorgenannte andere Schaltstellung des Membransystems. Das Magnetfeld ist hierbei eingeschaltet (H > 0) und im Fluid 2 herrscht ein etwas höherer Druck P2 als der Druck P1 im Fluid 1. Auch hier bewirkt dieser Druckunterschieds ΔP (P1 < P2) einen Fluidstrom 8 durch den freien Zwischenraum des ferromagnetischen Drahtgewebes, jedoch in umgekehrter Richtung, d.h. in Richtung des Fluids 1. Die im Rahmen der in **Fig.2** dargestellten Schaltstellung frei suspendierten magnetischen Partikel 9 werden jedoch hier durch das zugeschaltete Magnetfeld magnetisch durch das Drahtgewebe 5 angezogen und auch festgehalten. Der Fluidstrom 8 umfasst in dieser Schaltstellung lediglich die nichtmagnetischen Anteile.

Bei einem zyklischen Wechsel zwischen den beiden vorgenannten Schaltstellungen erfolgt ein Hin- und Herfließen der nichtmagnetischen Anteile im Drahtgewebe 5 mit den jeweils vorhandenen Fluidstrom 8, während die magnetischen Partikel und die ggf. an diesen anhaftenden oder verbundenen Anteile nur bei deaktivierten Magnetfeld durch den Fluidstrom 8 im Drahtgewebe 5 mitgerissen werden. Sie bewegen sich also schrittweise in eine vorbestimmte Richtung (im vorliegenden Fall in Richtung des Fluids 2, vgl. **Fig.2**) und konzentrieren sich in diesem auf. Zur Vermeidung eines Einfließens von nichtmagnetischen Bestandteilen eines der Fluide durch die Membran in das jeweilige andere Fluids müssen die Volumenstrombilanz des hin- und herbewegten Fluidstroms bezogen auf diese Anteile über den gesamten zusammenhängenden Betriebzeitraum ausgeglichen sein.

Soll eine Einströmung von nichtmagnetischen Bestandteilen aus Fluid 1 in Fluid 2 oder umgekehrt durch den Fluidstrom 8 vermieden werden, muss die jeweilige Schaltstellung vor Verlassen dieser Bestandteile aus dem Drahtgewebe 5 an der Membranoberfläche 6 abgebrochen werden. Die Dauer Δt in der jeweiligen Schaltstellung wird bei dieser Vorgabe dadurch begrenzt, d.h. es muss der mit der Schaltstellung verbundene Druckunterschied entweder aufgehoben werden (ΔP = 0) oder in die jeweils andere Schaltstellung umgeschaltet werden, d.h. der Druckunterschied muss einen Vorzeichenwechsel durchlaufen. Eine Überschreitung von Δt ohne einen vorgenannten Abbruch oder Umschaltung der Schaltstellung würde unweigerlich eine Einleitung der vorgenannten nichtmagnetischen Bestandteilen in das jeweilig gegenüberliegende Fluid bewirken.

Werden die vorgenannten Schaltzeiten und Volumenbilanzen eingehalten, kann es lediglich in den Mikrokanälen des Drahtgewebes zu einer geringfügigen Durchmischung zwischen den Fluid 1 und 2 kommen.

Das magnetische Membransystem wirkt als semipermeable Wand, die von magnetischen Partikeln in eine vorgebare Richtung durchdrungen wird, nicht aber von den nichtmagnetischen Bestandteilen der Fluide. Der Wechsel der Schaltstellungen erfolgt vorzugsweise mit sehr hoher Zyklusfrequenz, dass die Durchdringung der Magnetmembran durch die magnetischen Partikel praktisch kontinuierlich (quasikontinuierlich) erfolgt und es zu keiner Partikelakkumulation innerhalb der Membran kommt.

In gewissen Fällen kann es auch vorteilhaft sein die Dauer Δt der Schaltstellung mit aktiviertem Magnetfeld (vgl. **Fig.3**) etwas länger zu wählen als die Dauer Δt der Schaltstellung mit deaktiviertem Magnetfeld (vgl. **Fig.2**). Hierdurch kommt es gemittelt zu einer leichten Durchdringung der nichtmagnetischen Bestandteile von Fluid 2 durch die Membran 3 entgegen der Migration der magnetischen Partikel 9. Handelt es sich bei den nichtmagnetischen Bestandteilen des Fluids 2 z.B. um eine Waschlösung, werden die magnetischen Partikel bei ihrem Durchtritt durch die das Drahtgewebe 5 der Membran 3 gleichzeitig bereits effektiv im Gegenstrom gewaschen.

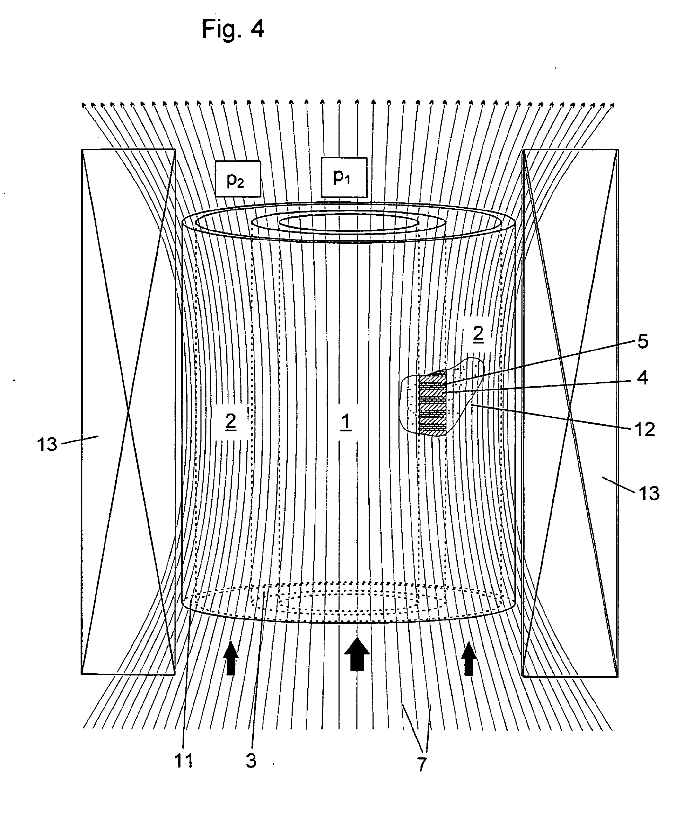

**Fig.4** zeigt schematisch eine bevorzugte zylinder- oder rohrförmig aufgebaute Ausführungsform, bei der die Membran 3 als Rohrstück geformt konzentrisch in einem rohrförmigen.Gehäuse 11 eingesetzt ist und dessen Innenvolumen in zwei Kammern zum axialen Führen der Fluide 1 und 2 (Fließrichtung ist jeweils mit Pfeilen angedeutet) unterteilt. Der Teilausschnitt 12 gibt eine Schnittdarstellung mit den entsprechend der rohrförmig gestalteten Membran 3 als Ringe ausgebildeten weichmagnetischen Lagen aus Massivmaterial 4 und Drahtgewebe 5 wieder. Zur Erzeugung des erforderlichen magnetischen Felds ist au-βerhalb des Gehäuses 11 die Spule 13 eines Elektromagneten angeordnet. Die Spule erzeugt im Inneren des Gehäuses ein rotationssymmetrisches Magnetfeld, deren Magnetfeldlinien 7 auf die vorgenannten weichmagnetischen Bestandteile der Membran in der Weise wirken, dass neben axialen Feldgradienten (in Richtung der Spulenlängsachse) auch geringe Magnetfeldinhomogenitäten in radialer Richtung auftreten. Die radialen Inhomogenitäten sind dabei derart gestaltet, dass das Magnetfeld im Gehäuse 11 in Richtung der Spuleninnenwand, d.h. nach au-βen zum Gehäuse 11 hin zunimmt (in **Fig.4** durch eine Erhöhung der Feldliniendichte dargestellt). Innerhalb des Gehäuses, d.h. im Spuleninneren befindliche magnetische Materialien wie die magnetischen Partikel erfahren dadurch eine Kraftwirkungen nicht nur in axialer Richtung (zur Spulenlängsachse), sondern auch in radialer Richtung (axial nach außen der steigenden Feldliniendichte folgend).

Das partikelhaltige Fluid 1 wird vorzugsweise, angedeutet durch einen Pfeil, axial in das Innere der rohrförmigen Membran 3 zugeführt. Der Bereich zwischen der äußeren Membranoberfläche der Membran 3 und der Innenfläche des rohrförmigen Gehäuses 11 wird vom Fluid 2 durchströmt (Fließrichtung als Pfeile angedeutet). Während des Betriebs durchdringen die magnetischen Partikel bei entsprechender Vorgabe der Schaltstellungen die Membran in vorgenannter Weise wegen der vorgenannten zusätzlichen magnetischen axialen Kraftkomponenten vorzugsweise axial nach außen, d.h. von Fluid 1 zum Fluid 2.

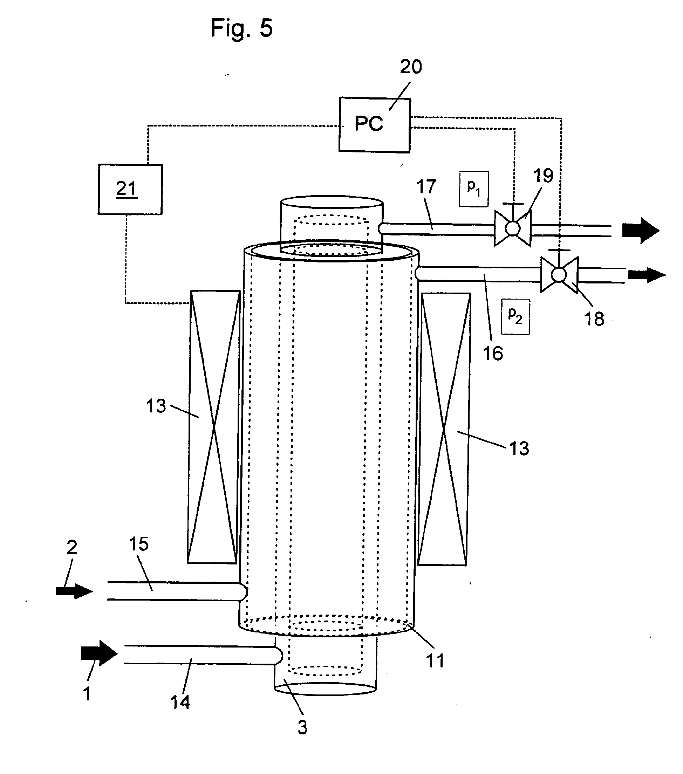

**Fig.5** zeigt eine schematische Gesamtansicht der Ausführungsform gem. **Fig.4** mit den Mitteln zur Erzeugung eines Druckgefälles zwischen den Fluiden 1 und 2 sowie mit den für einen Betrieb erforderlichen Peripheriekomponenten. Membran 3 und Gehäuse 11 sind als beidseitig verschlossene Rohrstücke axial zueinander angeordnet, wobei die fluiddurchlässigen Komponenten der Membran wie das Drahtgewebe ausschließlich innerhalb des Gehäuses angeordnet sind. Die aus dem Gehäuse überstehenden Teile der zylinderförmigen Membran dienen lediglich zum Fluidanschluss.

Die Fluide 1 und 2 werden über Zuleitungen 14 bzw. 15 in das Innere der zylinderförmigen Membran 3 bzw. des Gehäuses 11 eingeleitet und über die Abläufe 16 bzw. 17 an Drosselventile 18 bzw. 19 zur Erzeugung von Staudrücken im semipermeablen Membransystem entsprechend P1 bzw. P2 weitergeleitet. Unterschiedliche Staudrücke erzeugen eine Fluidströmung in der Membran. Die Drosselventile 18 und 19 werden zudem über eine Ansteuerung 20, vorzugsweise einen Prozessrechner oder einen PC angesteuert und sind damit wesentliche Bestandteile der vorgenannten Mittel zur Erzeugung einer Fluidströmung axial zum mikrofluidischen Kanal mit zwei Schaltstellungen entsprechend der beiden Fließrichtungen. Die Ansteuerung dient zudem zur Aktivierung bzw. Deaktivierung des Elektromagneten 13 über eine zwischengeschaltete Verstärkereinheit 21 (z.B. Netzgerät) entsprechend der beiden vorgenannten Schaltstellungen (vgl. **Fig.2 und 3****).** Durch Programmierung einer Regelungssoftware in der Ansteuerung 20 lassen sich die beiden beschriebenen Schaltstellungen automatisiert und mit hoher Zyklusfrequenz einstellen.

### Literatur:

[1] Kapitel: Membranes and Membrane Separation Processes in Ullmann's Encyclopedia of Industrial Chemistry Wiley-VCH Verlag, 2002
[2] WO 2004/078306 A2

### Bezugszeichenliste:

- 1: Fluid 1
- 2: Fluid 2
- 3: Membran
- 4: Massivmaterial
- 5: Drahtgewebe
- 6: Membranoberflächen
- 7: Magnetfeldlinien
- 8: Fluidstrom
- 9: Magnetische Partikel
- 10: Trennungslinie
- 11: Gehäuse
- 12: Teilausschnitt
- 13: Spule (des Elektromagneten)
- 14: Zuleitung (Fluid 1)
- 15: Zuleitung (Fluid 2)
- 16: Ablauf (Fluid 1)
- 17: Ablauf (Fluid 2)
- 18: Drosselventil (Fluid 1)
- 19: Drosselventil (Fluid 2)
- 20: Ansteuerung
- 21: Verstärkereinheit

## Patentansprüche

1. Verfahren für eine Überführung magnetischer Partikelfraktionen von einem ersten Fluid (1) zu einem zweiten Fluid (2) durch ein semipermeables Membransystem umfassend,
a) eine Membran (3) mit zwei Membranoberflächen (6) als Trennung zwischen dem ersten und zweiten Fluid (1, 2) mit mindestens einen die Membran überbrückenden Kanal, wobei die Membran (3) ein magnetisierbares Material umfasst,
b) Mittel zur Erzeugung einer Fluidströmung über einen Differenzdruck zwischen den beiden Fluidfraktionen axial zum Kanal mit zwei Schaltstellungen entsprechend der beiden Fließrichtungen sowie
c) Mittel zur Erzeugung eines ein- und ausschaltbaren Magnetfelds im Kanal,
**dadurch gekennzeichnet, dass**
d) durch die Mittel für einen Betriebszustand ein zyklischer Wechsel der beiden Schaltstellungen mit Zykluszeiten erfolgt, wobei das Magnetfeld bei der ersten Schaltstellung eingeschaltet und bei der zweiten Schaltstellung ausgeschaltet ist und wobei die Zykluszeiten eine zeitliche Begrenzung unterhalb einer Durchdringungszeit der Fluidströmung durch die Membran aufweist sowie
e) der Differenzdruck mit einem Schaltstellungswechsel sein Vorzeichen wechselt,

2. Verfahren nach Anspruch 1, **dadurch gekennzeichnet, dass** das Magnetfeld die Kanäle kreuzende Magnetfeldlinien (7) umfasst.

3. Verfahren nach Anspruch 1 oder 2, **dadurch gekennzeichnet, dass** die Membran (3) mehrere übereinander gestapelte Lagen aus einem durchströmbaren Material als Kanäle und aus einem magnetisierbaren Massivmaterial (4) in abwechselnder Reihenfolge und die beiden Membranoberflächen (6) überbrückend umfasst.

4. Verfahren nach Anspruch 3, **dadurch gekennzeichnet, dass** das durchströmbare Material aus einem Drahtgewebe (5), umfassend ein magnetisierbares Material, besteht.

5. Verfahren nach Anspruch 1, **dadurch gekennzeichnet, dass** die Mittel mindestens einen Aktor zur Erzeugung einer Druckdifferenz zwischen den beiden Fluidfraktionen oder eines Druckanstiegs oder Druckimpulses in mindestens einer der Fluidfraktion umfassen.

6. Verfahren nach einem der vorgenannten Ansprüche, **dadurch gekennzeichnet, dass** die beiden Fluidfraktionen durch parallel zur Membran bewegte Fluide (1, 2) gebildet sind.

7. Verfahren nach Anspruch 6, **dadurch gekennzeichnet, dass** die Mittel mindestens ein Drosselventil (18, 19) für mindestens eines der bewegten Fluide (1, 2) umfassen.

8. Verfahren nach einem der vorgenannten Ansprüche, **dadurch gekennzeichnet, dass** das Magnetfeld durch Elektromagnete (13), supraleitende Magnetspulen oder schaltbare Permanentmagnete erzeugbar ist.

9. Verfahren nach einem der vorgenannten Ansprüche, **dadurch gekennzeichnet, dass** die Membran (3) als Rohrstück geformt konzentrisch in einem rohrförmigen Gehäuse (11) eingesetzt ist, wobei im Innern des Rohstücks eines der Fluide (1, 2) und zwischen dem Rohrstück und Gehäuse die andere der Fluide (1, 2) geführt wird.

10. Verfahren nach Anspruch 9, **dadurch gekennzeichnet, dass** das Magnetfeld elektromagnetisch und rotationssymmetrisch im Innern des Gehäuses generierbar ist.

11. Verfahren nach einem der vorgenannten Ansprüche, **dadurch gekennzeichnet, dass** ein Prozessrechner als Ansteuerung (20) der Mittel und des Magnetfelds vorgesehen ist.

## Claims

1. Method for transferring magnetic particle fractions from a first fluid (1) to a second fluid (2) through a semi-permeable membrane system comprising
a) a membrane (3) having two membrane surfaces (6) as a separation between the first and second fluid (1, 2) with at least one channel bridging the membrane, wherein the membrane (3) comprises a magnetisable material,
b) means for generating a fluid flow via a differential pressure between the two fluid fractions in the axial direction relative to the channel with two switching positions corresponding to the two flow directions, and
c) means for generating a magnetic field in the channel, which magnetic field can be switched on and off,
**characterised in that**
d) for one operating state a cyclic changing of the two switching positions takes place by the means in cycle times, wherein the magnetic field is switched on in the first switching position and is switched off in the second switching position, and wherein the cycle times are temporally limited to less than the time required for the fluid flow to pass through the membrane, and
e) the differential pressure changes its sign when there is a change in the switching position.

2. Method according to claim 1, **characterised in that** the magnetic field comprises magnetic field lines (7) which cross the channels.

3. Method according to claim 1 or 2, **characterised in that** the membrane (3) comprises a plurality of layers stacked one on top of the other and consisting of a permeable material as the channels and of a magnetisable solid material (4) in an alternating sequence and bridging the two membrane surfaces (6).

4. Method according to claim 3, **characterised in that** the permeable material consists of a wire mesh (5) comprising a magnetisable material.

5. Method according to claim 1, **characterised in that** the means comprise at least one actuator for generating a pressure difference between the two fluid fractions or a pressure rise or pressure pulse in at least one of the fluid fractions.

6. Method according to any one of the preceding claims, **characterised in that** the two fluid fractions are formed by fluids (1, 2) moving parallel to the membrane.

7. Method according to claim 6, **characterised in that** the means comprise at least one throttle valve (18, 19) for at least one of the moving fluids (1, 2).

8. Method according to any one of the preceding claims, **characterised in that** the magnetic field can be generated by electromagnets (13), superconductive magnetic coils or switchable permanent magnets.

9. Method according to any one of the preceding claims, **characterised in that** the membrane (3), formed as a tubular piece, is inserted concentrically into a tubular housing (11), wherein one of the fluids (1, 2) is passed inside the tubular piece and the other of the fluids (1, 2) is passed between the tubular piece and the housing.

10. Method according to claim 9, **characterised in that** the magnetic field can be generated electromagnetically and in a rotationally symmetrical manner in the interior of the housing.

11. Method according to any one of the preceding claims, **characterised in that** a process computer is provided as a controller (20) for the means and the magnetic field.

## Revendications

1. Procédé de transfert de fractions de particules magnétiques d'un premier fluide (1) dans un second fluide (2) par un système de membrane semi-perméable comprend :
a) une membrane (3) ayant deux surfaces de membrane (6) séparant le premier et le second fluide (1, 2) avec au moins un canal contenant la membrane,
• la membrane (3) ayant un matériau aimanté,
b) des moyens pour généré une veine de fluide par une pression différentielle entre les deux fractions de fluide, axialement par rapport au canal avec deux positions de commutation correspondant aux deux directions de passage ainsi que,
c) des moyens pour générer un champ magnétique susceptible d'être établi ou coupé dans le canal,
procédé **caractérisé en ce que**
d) des moyens pour en état de fonctionnement produisent une alternance cyclique des deux positions de commutation avec des temps de cycle,
• le champ magnétique étant établi pour la première position de commutation et il est coupé pour la seconde position de commutation,
• les durées de cycles ont une limite de temps inférieur au temps moyen de passage de la veine de fluide à travers la membrane,
e) le signe algébrique de la différence de pression alterne avec l'alternance de la position de commutation.

2. Procédé selon la revendication 1,
**caractérisé en ce que**
le champ magnétique comporte des lignes de champs magnétiques (7) croisant les canaux.

3. Procédé selon la revendication 1 ou 2,
**caractérisé en ce que**
la membrane (3) comporte plusieurs couches empilées d'un matériau susceptible d'être traversé, constituant des canaux et d'un matériau massif (4) susceptible d'être aimanté, dans un ordre alterné et chevauchant les deux surfaces de membrane (6).

4. Procédé selon la revendication 3,
**caractérisé en ce que**
le matériau susceptible d'être traversé est un tissu de fils (5) comportant un matériau susceptible d'être aimanté.

5. Procédé selon la revendication 1,
**caractérisé en ce que**
les moyens comportent au moins un actionneur pour générer une différence de pression entre les deux fractions de fluides ou une augmentation de la pression ou une impulsion de pression dans au moins l'une des fractions de fluides.

6. Procédé selon l'une des revendications précédentes,
**caractérisé en ce que**
les deux fractions de fluides sont formées par des fluides (1, 2) se déplaçant parallèlement à la membrane.

7. Procédé selon la revendication 6,
**caractérisé en ce que**
les moyens comportent au moins une soupape d'étranglement (18, 19) pour au moins un fluide en mouvement (1, 2).

8. Procédé selon l'une des revendications précédentes,
**caractérisé en ce que**
le champ magnétique est généré par des électroaimants (13), des bobines électromagnétiques supraconductrices ou des aimants permanent commutables.

9. Procédé selon l'une des revendications précédentes,
**caractérisé en ce que**
la membrane (3) est en forme d'élément tubulaire, placée concentriquement dans un boîtier tubulaire (11), et
• l'un des fluides (1, 2) passe à l'intérieur de l'élément tubulaire et l'autre fluide (1, 2) passe entre l'élément tubulaire et le boîtier.

10. Procédé selon la revendication 9,
**caractérisé en ce que**
le champ magnétique est généré de manière électromagnétique et avec une symétrie de rotation à l'intérieur du boîtier.

11. Procédé selon l'une des revendications précédentes,
**caractérisé par**
un calculateur de procédé pour commander (20), les moyens et le champ magnétique.
